# EUROPÄISCHE PATENTANMELDUNG

(11) **EP 0 978 465 A1**
(43) Veröffentlichungstag der Anmeldung: **09.02.2000**
(21) Anmeldenummer: 99115526.8
(22) Anmeldetag: 05.08.1999
(51) Int. Cl.: B65G 21/20, B65G 17/00, B65G 35/06

(54) **Vorrichtung zum linearen Bewegen von Bauteilen**

(30) Priorität: 06.08.1998 DE 19835523
(71) Anmelder: Griethe, Albert, 37308 Pfaffschwende (DE)
(72) Erfinder: Die Erfindernennung liegt noch nicht vor
(74) Vertreter: Liedtke, Klaus, Dr.

(57) **Zusammenfassung**

Vorrichtung mit zwei parallel angeordnete Führungsmodule, die jeweils mindestens einen Magnet (1), mindestens eine Magnethalteleiste (2.1) und ein Transportband (13) aufweisen, wobei die Transportbänder (13) oberhalb der Magnethalteleisten (2.1,2.2) laufen und daß die Bauteile auf einem Werkstückträger (8) angeordnet sind, der auf beiden Führungsmodulen gleitet und der mindestens eine Ankerplatte (7) aus magnetisierbarem Material enthält.

## Beschreibung

Die Erfindung betrifft eine Vorrichtung zum linearen Bewegen von Bauteilen, insbesondere für Transport- und Justierbewegungen, bei der die Bauteile magnetisch mit einer Führungsbahn koppelbar sind und die Bewegung mit Hilfe eines elektrisch angetriebenen Transportbandes ausgeführt wird.
Sie ist insbesondere für den Einsatz in Montageautomaten und im Sondermaschinenbau geeignet.

Für Montageautomaten und im Sondermaschinenbau werden für derartige Aufgaben häufig sogenannte Rundtakter eingesetzt, bei denen auf dem äußeren Rand eines Tellers Werkstückträger befestigt sind, wobei der Teller durch ein Schrittgetriebe angetrieben wird. Am Umfang dieses Tellers befinden sich die jeweiligen Montagestationen. Nachteilig ist hierbei, daß die Anzahl der Montagestationen begrenzt und ein modularer Aufbau nur schwer erreicht werden kann.

Für lineare Transportsysteme ist die Anwendung von Kettensystemen bekannt. Die Kettenglieder nehmen dabei den Werkstückträger auf Diese Ausführungen sind dadurch nachteilbehaftet, daß bei längeren Kettensystemen die Masse der zu bewegenden Teile sehr hoch ist und der Antrieb dadurch beim Übergang von der Schritt- zur Ruhebewegung stark belastet wird. Dies steht der Forderung nach Erhöhung der Taktfrequenz entgegen.

Nach DE 31 47 414 A 1 ist eine Vorrichtung zum Fördern von magnetischen Werkstücken bekannt, bei der entlang des Förderweges Haltemagnete angeordnet sind, die mit magnetisierbaren Rollen versehen sind, an welchen das zu transportierende Werkstück anliegt. Das Anziehen des Werkstückes gegen die Rollen erfolgt bei dieser Vorrichtung sowohl durch die Magnetkraft der Polschuhe, als auch durch die Magnetkraft der die gleiche Polteilung wie die Polschuhe aufweisenden Rollen. Die Rollen stehen etwas über die Polschuhe hervor, so daß das Werkstück bei seiner Verschiebung mittels einer Schleppeinrichtung nur an den gelagerten Rollen anliegt, deren Abstand zueinander kleiner als die Abmessungen der Werkstücke in Förderrichtung sein muß. Die Schleppeinrichtung kann aus einem an den Rollenkörpern anliegenden umlaufenden und angetriebenen Transportband bestehen. Nachteilig ist bei dieser Anordnung, daß nur Werkstücke transportiert werden können, deren Abmessungen in Förderrichtung größer als der Rollenabstand ist, und daß die zu transportierenden Werkstücke nicht von unten zugänglich sind, was für eine Reihe von Montageaufgaben erforderlich ist.

Der Erfindung liegt die Aufgabe zugrunde eine Vorrichtung der eingangs genannten Art zu schaffen, die Werkstücke mit beliebigen Abmessungen transportieren kann und bei der die Werkstücke sowohl von oben als auch von unten zugänglich sind.

Erfindungsgemäß wird die Aufgabe mit den kennzeichnenden Merkmalen von Anspruch 1 gelöst.

Vorteilhafte Ausgestaltungen sind in den Unteransprüchen angegeben.

Die erfindungsgemäße Vorrichtung ist für vielfältige Transportaufgaben, insbesondere für Transportaufgaben in automatisierten Montageeinrichtungen geeignet. Sie ist auch für die Anwendung in einem Shuttelsystem, in dem ein Werkstückträger mehrere Montageautomaten durchläuft, einsetzbar.

Die Anordnung weist eine Reihe von Vorteilen auf Hierzu zählen insbesondere:
- Der einfache modulare Aufbau ermöglicht den Aufbau eines Baukastensystem mit einer große Anwendungsvielfalt bei günstigen Herstellungskosten. Als Module sind insbesondre geeignet: die Zuführeinheit, die Antriebseinheit und eine Transporteinheit, bestehend aus Grundgestell, Magnethalteleiste, Antriebsrad und Umlenkrolle.
- Eine flexible Anwendung ist ferner durch die Realisierungsmöglichkeit von Positionierungsmöglichkeit des Werkstückträgers mit beliebiger Schrittgröße gegeben, da innerhalb des Transportsystems keine Indexierung und damit keine Rasterung erfolgt und die Kopplung des Werkzeugträgers mit dem Transportband kraftschlüssig und damit stufenlos erfolgt.
- Der Abstand x der beiden Magnethalteleisten kann mit geringem Aufwand der Arbeitsaufgabe angepaßt werden.

Die Erfindung wird im folgenden an einem Ausführungsbeispiel näher erläutert. In den zugehörigen Zeichnungen zeigen:
- Figur 1: die Seitenansicht eines Transportsystems
- Figur 2: die Draufsicht auf die Gesamtanordnung mit zwei Führungsmodulen,
- Figur 3: den Schnitt G - H durch die Anordnung,
- Figur 4: das Bewegungsschema für den Schrittbetrieb der Werkstückträger,
- Figur 5: eine Schnittdarstellung für ein Bauteil der Transportvorrichtung mit magnetisierbaren Wälzkörpern,
- Figur 6: eine Seitenansicht des in Figur 5 dargestellten Bauteils,
- Figur 7: ein Bauteil zur Erzeugung von Schrittbewegungen,
- Figur 8: ein Führungsbauteil mit umlaufenden Wälzkorpern,
- Figur 9: eine Anordnung zum Lösen gespannter Schlitten im Schnitt,
- Figur 10: die Anordnung zum Lösen gespannter Schlitten in der Draufsicht,
- Figur 11: eine Ausführungsform mit Gleitsteinen im Schnitt,
- Figur 12: die Ausführungsform mit Gleitsteinen im Längsschnitt,
- und Figur 13: eine Ausführung mit zwei Magneten.

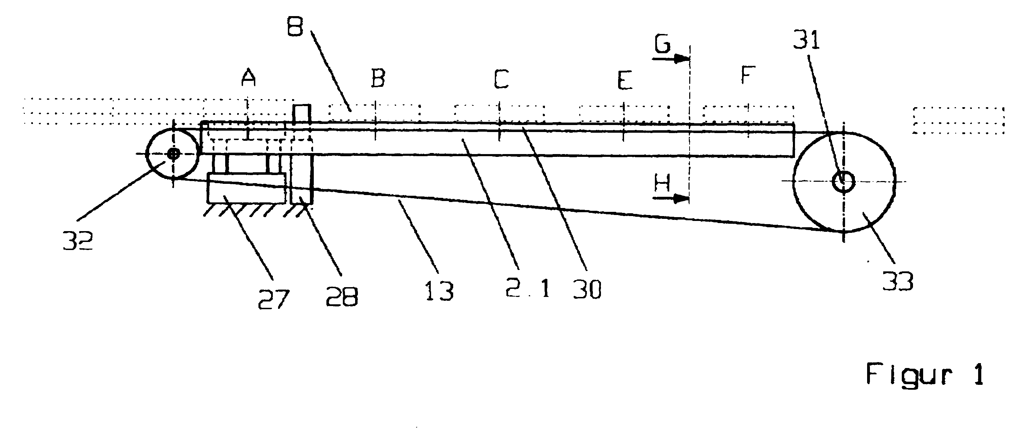

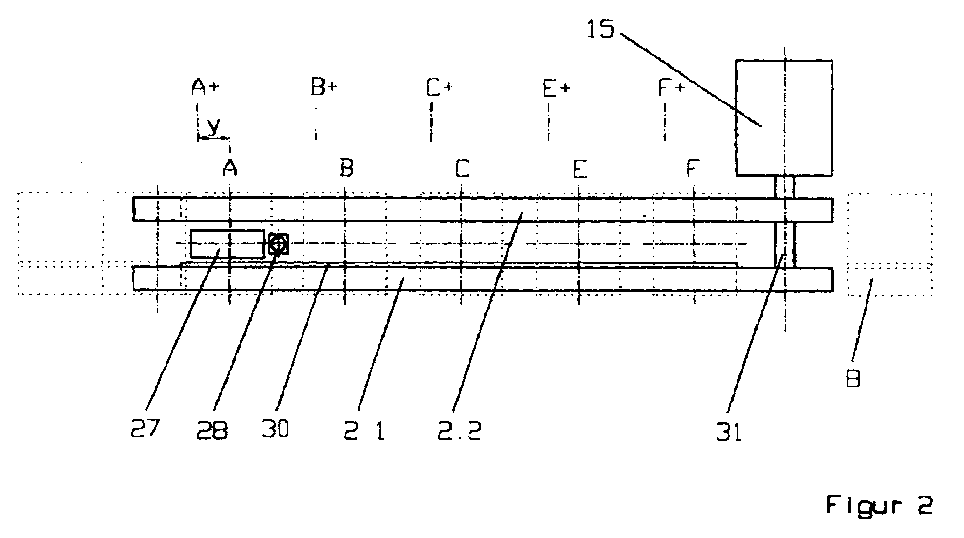

Die Figuren 1 bis 3 erläutern eine Ausführungsform für ein Transportsystem mit zwei parallel angeordneten Führungsmodulen. Das Transportsystem ist vorzugsweise für den Einsatz in Montageautomaten geeignet.

Bei jedem Führungsmodul läuft zwischen der Umlenkrolle 32 und dem Antriebsrad 33 ein Transportband 13, mit dem die schrittweise Transportbewegung auf die Werkstückträger 8 übertragen wird. Wie aus Figur 1 ersichtlich ist, befinden sich im Einlaufbereich des Transportsystems die Umlenkrolle 32 , eine Zuführeinrichtung 27 und der Anschlag 28. Die Lagerungen der Umlenkrolle 32 und des Antriebsrades 33 sind an einem in der Figur nicht dargestellten Grundgestell angebracht. Jede Magnethalteleiste 2.1, 2.2 ist an einem gesondertem Grundgestell befestigt. Der Abstand x zwischen den beiden Magnethalteleisten 2.1 und 2.2 wird durch Distanzstücke, die zwischen den zugehörigen Grundgestellen angeordnet sind, definiert. Als Antrieb 15 wird vorteilhaft ein Schrittmotor oder ein Schrittgetriebe verwendet. Zwischen Antrieb 15 und Antriebswelle 31 kann noch ein Zwischengetriebe angeordnet sein.

Der in Transportrichtung laufende Teil des Transportbandes 13 wird durch eine Magnethalteleiste 2 gestützt und geführt. In der Magnethalteleiste 2 befinden sich direkt unter dem Transpotband 13 hintereinander angeordnete Magnete.
Die Werkstückträger 8 sind auf der Unterseite, die auf den Transportbändern 13 aufliegt mit zwei Ankerplatten 7 aus magnetisierbarem Material versehen Diese Ankerplatten 7 sind über den Transportbändern 13 angeordent und werden durch die Kraftwirkung des magnetischen Feldes auf die Transportbänder 13 gepreßt und dadurch kraftschlüssig durch die Reibung dort in ihrer Position fixiert.

Im Auslaufbereich befinden sich keine Magnete, so daß die Werkstückträger 8 dort nicht mehr auf die Transportbänder 13 gepreßt werden und aus der Vorrichtung auslaufen und durch ein Abtransporteinrichtung übernommen werden können.

Die Werkstückträger 8 mit den Ankerplatten werden mit der Zuführeinrichtung 27 auf das Transportsystem aufgesetzt und durch den Anschlag 28 und die Führungsleiste 30 in die Ausgangsposition A gebracht.

Die Zuführeinrichtung 27 führt eine vertikale Bewegung aus und setzt dabei einen Werkstuckträger 8 auf die beiden Magnethalteleisten 2.1 und 2.2, mit denen er kraftschlüssig auf dem Transportband 13 gehalten wird. Die kraftschlüssige Lagesicherung wird durch das magnetische Feld erreicht, welches durch die Ankerplatten 7, die im Werkstücktrager 8 integriert sind, geleitet wird und diese dadurch auf das Transportband 13 zieht. Wird der Anschlag 28 abgesenkt, so gibt er den Weg für den Transport des Werkstückträgers 8 frei, der schrittweise in die nächsten Positionen B, C, E und F gebracht wird. In diesen Positionen verweilt der Werkstückträger 8 jeweils, damit die erforderlichen Arbeitsschritte am Werkstück ausgeführt werden können.

Eine vorteilhafte Ausführung sieht vor, daß die Zuführeinrichtung 27 und der Anschlag 28 in Transportrichtung zwischen zwei definierten Punkten im Abstand y verschoben werden können, so daß sich die Schrittlängenkette ebenfalls um diesen Betrag verschiebt und damit auch die definierten Schrittpositionen A, B, C, E, F zu den neuen Positionen A⁺, B⁺, C⁺, E⁺, F⁺ verlagert werden. Damit wird es mit einer einfachen Veränderung an der Vorrichtung möglich, daß in den Positionen A, B, C, E, F eine Ausführungsform eines Erzeugnisses und in den Positionen A⁺, B⁺, C⁺, E⁺, F⁺ eine zweite Ausführungsform gefertigt wird.

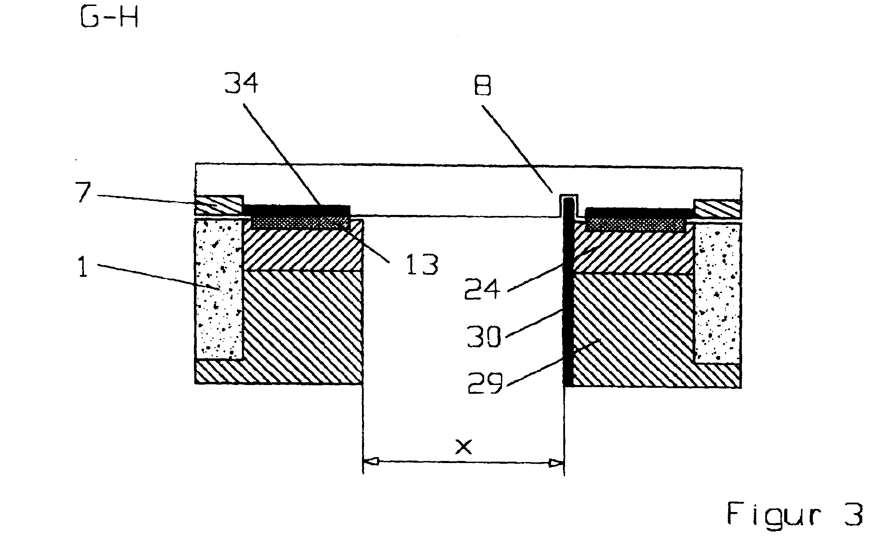

Figur 3 erläutert ein Beispiel für eine Anordnung der beiden Magnethalteleisten 2.1 und 2.2. Der Abstand x zwischen den beiden Magnethalteleisten 2.1, 2.2, die jeweils an Grundkörpern 29 angebracht sind, ist veränderbar, weil die Magnethalteleisten 2.1, 2.2 als zwei gesonderten Baugruppen parallel angeordnet sind. An der Magnethalteleiste 2.1 ist eine Führungsleiste 30 angebracht, die in eine entsprechende Ausnehmung am Werkstückträger 8 eingreift. Je nach Anwendungsfall können beliebige Abstände x erreicht werden. Es müssen lediglich die Werkzeugträger 8 sowie die Distanzstücke und - gegebenenfalls die Antriebswelle 31 für Antriebsräder 33 - angepaßt werden. Die Antriebsräder 33 für die beiden Transportbänder 13 sind zweckmäßigerweise miteinander verbunden, um eine synchrone Bewegung der Bänder zu gewährleisten. Im Werkstückträger 8 ist eine Reibeinlage 34 aus einem griffigen Kunststoff eingefügt, um die Reibung zwischen Werkstückträger 8 und Transportband 13 zu erhöhen. Das Transportband 13 läuft in einer Gleitschiene 24 aus Kunststoff oder Metall.

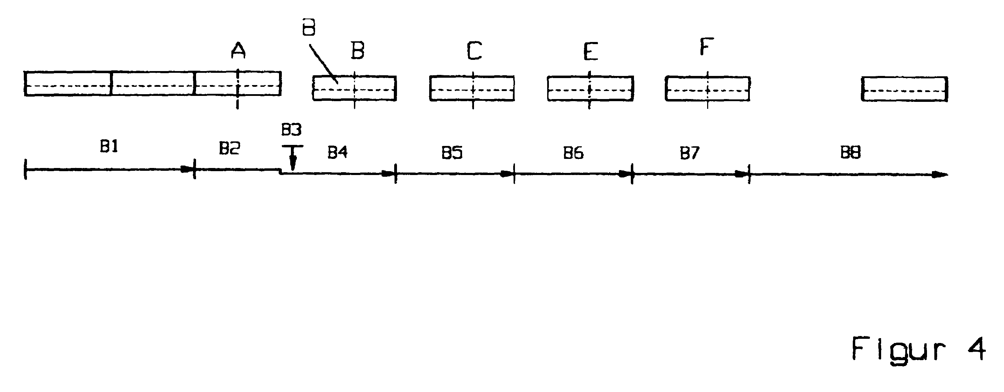

In Figur 4 wird der Ablauf der Schrittbewegungen erläutert. Die Bewegungsphase B1 beschreibt die Zuführung der Werkzeugträger und die Schritte B2 ....B8 die schrittförmigen Bewegungsphasen des Werkstückträgers 8 im Montageautomaten. Dabei erfolgt in der Phase B2 das Bewegen in die erste definierte Position A in der Phase B3 das Absenken des Werkstückträgers auf die Magnethalteleiste, in Phase B4 das Bewegen in die zweite definierte Position B, in Phase B5 das Bewegen in die dritte definierte Position C. In Phase B6 das Bewegen in die vierte definierte Position E, in Phase B7 das Bewegen in die fünfte definierte Position F und in Phase B8 die Auslaufbewegung, mit der der Auslauf und der Abtransport der Werkstückträger 8 durch ein Transportband erfolgt.
Der Werkstückträger 8 wird mit den geschilderten Bewegungen jeweils in die nächste definierte Position gebracht. Nach einer Verweilzeit, die dem Montagezeitraum im Montageautomaten entspricht, erfolgt die nachfolgende Schrittbewegung. In dem Zyklus 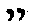 Fahren in eine Position" und 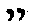 Verweilen in einer Position für den Montagevorgang" durchlaufen alle Werkstückträger 8 die als Längstakteinrichtung wirkende Transportvorrichtung.

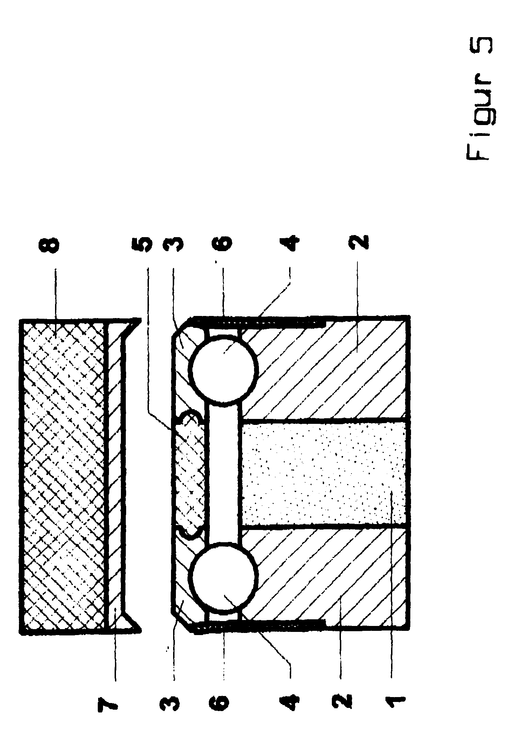

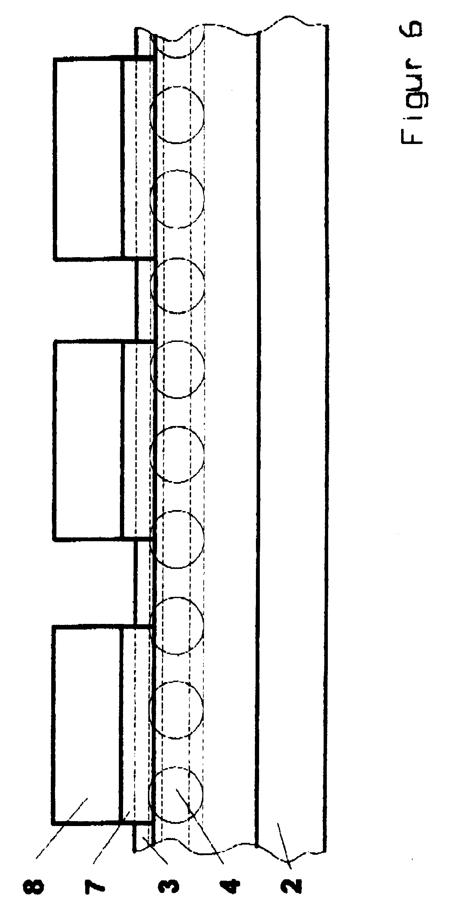

Ein Beispiel für ein Führungsmodul, das zum Einsatz in der erfindungsgemäßen linearen Transport- und Justiereinrichtung geeignet ist, ist in den Figuren 5 und 6 dargestellt. Die Anordnung enthält einen Dauermagneten 1, der von Magnethalteleisten 2, die aus magnetisierbarem Stahl bestehenden, eingeschlossen ist. In diesen Magnethalteleisten ist eine Lauffläche für die Wälzkörper 4, eingearbeitet. Das magnetische Feld des Dauermagneten 1 wird durch die Magnethalteleisten 2 geführt und der Magnetfluß über die Wälzkörper 4 auf die Rolleisten 3 geleitet. Die Wälzkörper 4 und die Rolleisten 3 sind ebenfalls aus magnetisierbarem Material hergestellt. Die beiden Rolleisten 3 sind mit Hilfe eines Abstandhalters 5, der aus nichtmagnetisierbarem Material besteht, fest verbunden. In die Rolleisten 3 ist eine der Form der Wälzkorpern 4 entsprechende Lauffläche eingearbeitet. Die beiden Rolleisten 3 sind magnetisch unterschiedlich polarisiert. Erst durch den durch magnetischen Fluß über die aus magnetisierbarem Material bestehende Ankerplatte 7 werden durch die Magnetkraftwirkung die Rolleisten 3 fest miteinander verbunden.

Wie aus Figur 5 ersichtlich ist, ist die Ankerplatte 7 mit dem Werkstückträger 8 fest verbunden. Beide bilden den Schlitten 9, der über die Rolleisten 3 linear bewegt wird. Infolge der magnetischen Kraftwirkung des Dauermagneten 1 wird die Ankerplatte 7 angezogen und die Position des Schlittens 9 auf den Rolleisten 3 bleibt unverändert. An der Anordnung sind seitlich Dichtungen 6 angebracht, die die Führungskörper und die Wälzkörper 4 vor Verschmutzungen schützen.

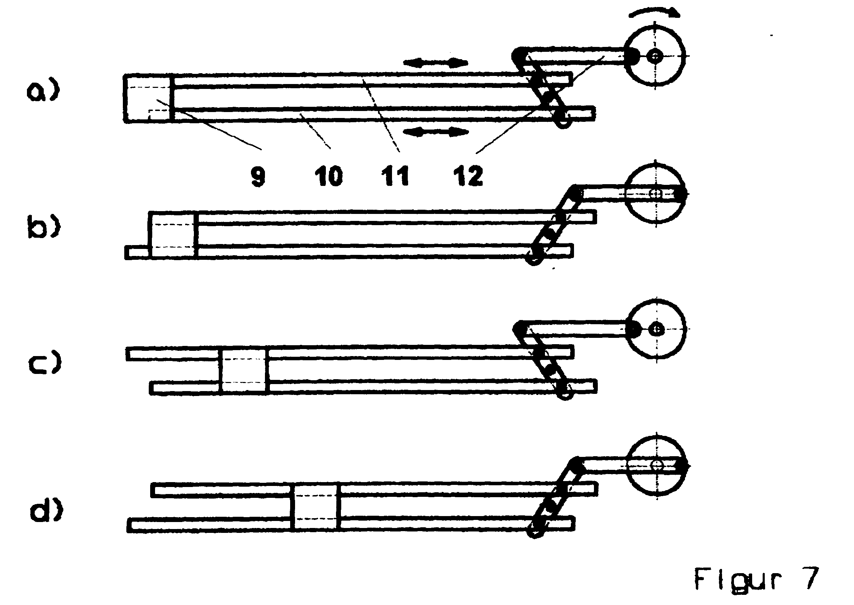

Figur 7 erläutert eine Ausführungsform, bei der der Schlitten schrittweise bewegt wird. Dort sind die einzelnen Schritte des definierten Weges des Schlittens 9 dargestellt. Der Schlitten 9 wird auf den Magnetrollschienen 10 und 11 in definierten Schrittfolgen weitergeschoben. Diese Magnetrollschienen entsprechen in der dargestellten Anordnung den Rolleisten 3. Im dargestellten Ausführungsbeispiel wird das magnetische Feld von einem Elektromagneten erzeugt.
Durch eine nichtdargestellte Zuführeinrichtung wird der Schlitten 9 in einer definierten Position auf den Magnetrollschienen 10 und 11 aufgesetzt. Der aufgesetzte Zustand ist aus der Figur 7 a ersichtlich. Das Aufsetzen erfolgt in einer Ruhephase, bei der beide Magnetrollschienen aktiviert sind. Bevor die Schrittphase beginnt, wird die Magnetrollschiene 10 deaktiviert. Das Kurbelgetriebe 12 dient zur definierten Fortbewegung des Schlittens 9. In Figur 7b ist dargestellt, wie mit einem Kurbeltrieb 12 die Magnetrollschiene 11 um einen bestimmten Weg mit dem Schlitten 9 nach vorn geschoben wird. Die Magnetrollschiene 10 bewegt sich dabei um den gleichen Weg nach hinten. Kurz nach dem Eintreten der Ruhephase werden die beiden Magnetrollschienen 10 und 11 aktiviert. Bevor eine neue Schrittphase beginnt, wird gemäß Figur 7c die Magnetrollschiene 11 deaktiviert. Das Kurbelgetriebe 12 zieht die Magnetrollschiene 10 um einen definierten Weg mit dem Schlitten 9 nach vorn. Die Magnetrollschiene 11 wird um den gleichen Weg nach hinten geschoben. Kurz nachdem die Ruhephase wieder eingetreten ist, werden wieder beide Magnetrollschienen 10 und 11 aktiviert. In Figur 7d läuft der gleiche Arbeitsschritt wie der in Figur 7b ab.

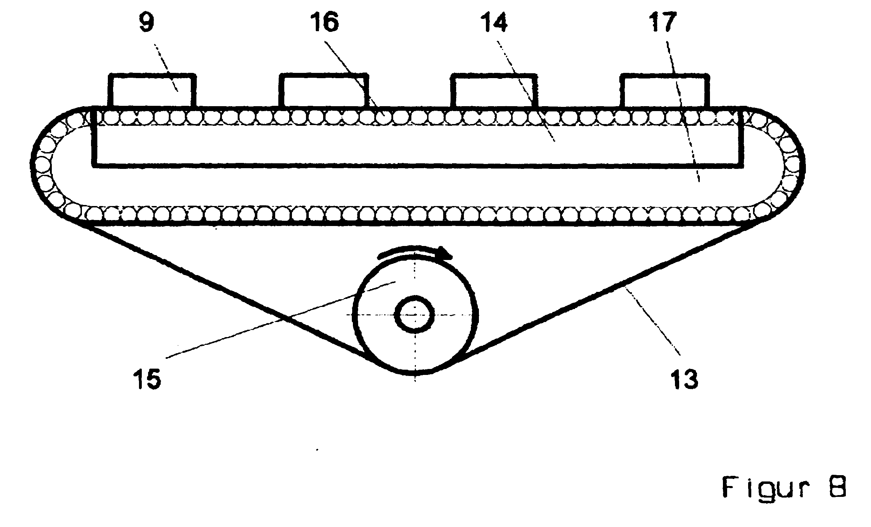

In Figur 8 ist eine Ausführungsform mit umlaufenden Wälzkörpern dargestellt. Die Schlitten 9 werden hierbei auf einem Transportband 13, das aus Federbandstahl besteht, mit Hilfe des Antriebs 15 bewegt. Die Rollen 16 werden in einem Umlenkgehäuse 17 geführt. Dieses Umlenkgehäuse besteht aus nichtmagnetisierbarem Material. Die zur Lagefixierung der Magnete vorgesehen Halteleisten 14 bestehen aus magnetisierbarem Stahl.

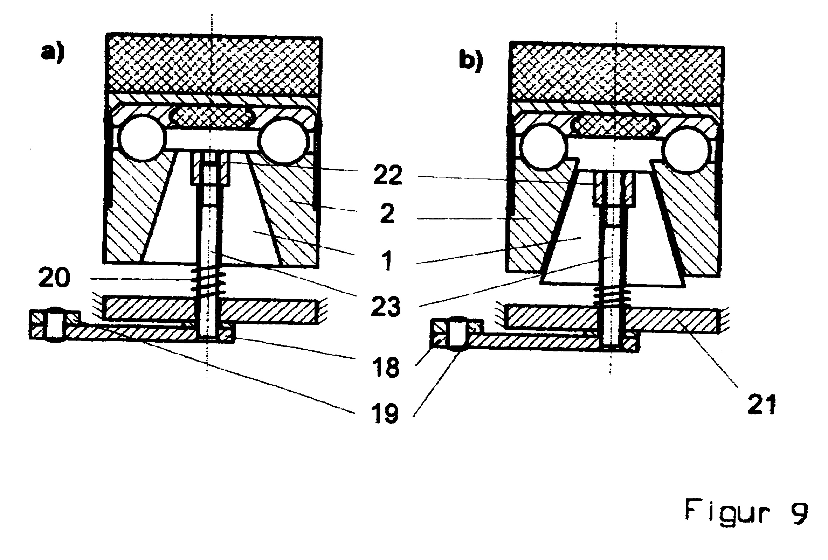

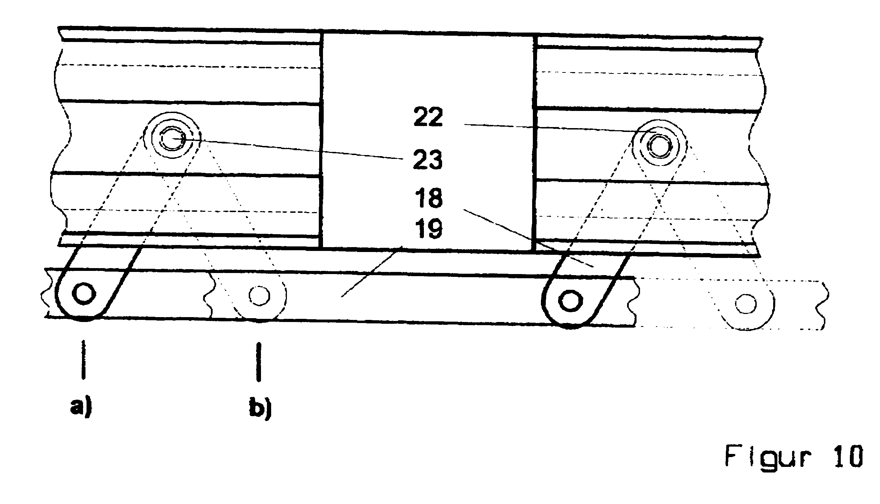

Die Figuren 9 und 10 erläutern eine Vorrichtung, mit der die Kraftwirkung des magnetischen Feldes aufgebracht und aufgehoben werden kann. Dies erfolgt durch das Andrücken des Dauermagneten 1 an die Magnethalteleisten 2 bzw. durch deren Abheben. Bei dem in Figur 9a dargestellten Zustand ist die magnetische Kraft wirksam. In der in 9b gezeigten Stellung ist das magnetische Feld durch das Abdrücken der Dauermagneten 1 von den Magnethalteleisten 2 mit Hilfe des Gewindebolzens 23 und der Gewindebuchse 22 deaktiviert. Die Andrückkraft erzeugt die Druckfelder 20. Das Einleiten der Bewegung erfolgt über den Hebel 18 und die Stelleiste 19. Der Gewindebolzen 23 stützt sich dabei an der Druckplatte 21 ab.

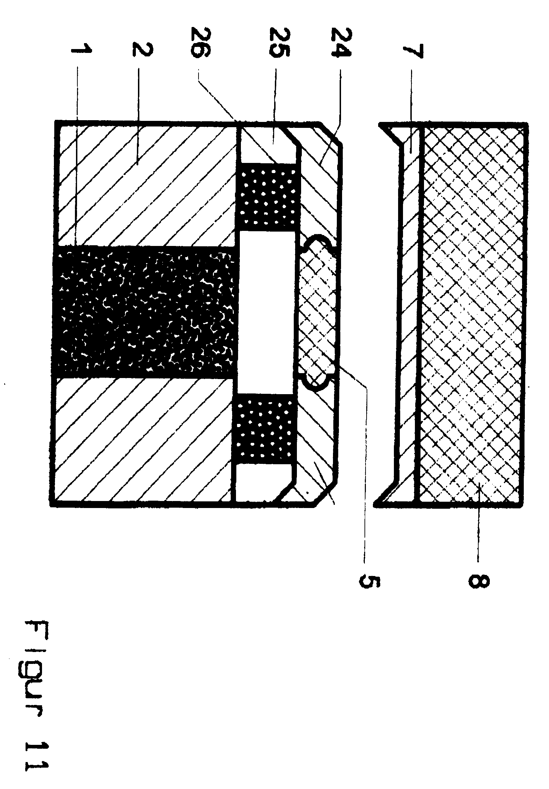

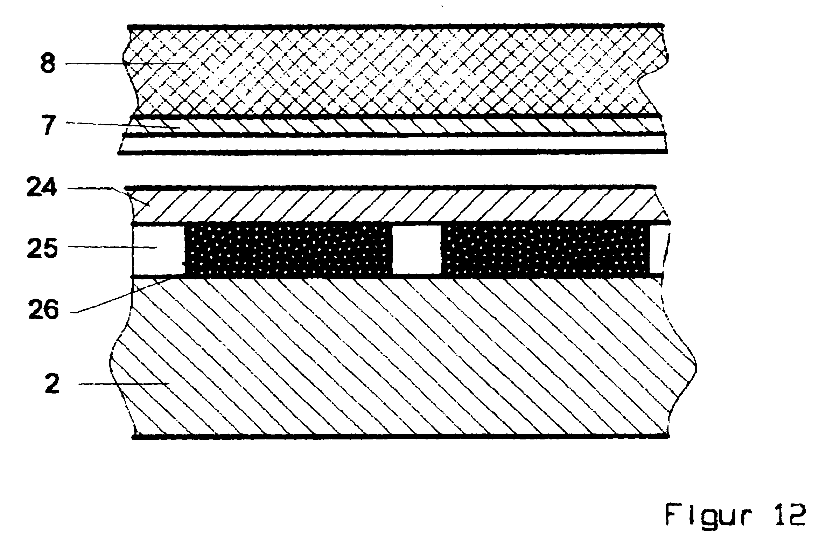

In den Figuren 11 und 12 ist eine Ausführungsform dargestellt, bei der zwischen der Magnethalteleiste 2 und einer Gleitleiste 24 Gleitsteine 25 angeordnet sind, die mit Durchbrüchen versehen sind, in denen sich jeweils mehrere magnetisierbare Kugeln 26 befinden.

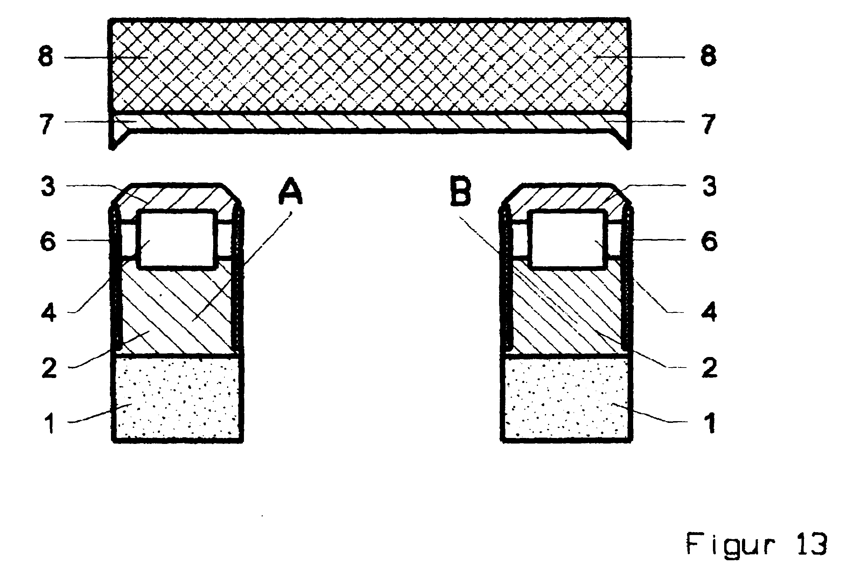

Ein Gestaltungsbeispiel, bei dem zwei Magnete 1 in jeweils getrennten Bauteilen angeordnet sind, ist in Figur 13 dargestellt.

### Bezugszeichenliste

- 1: Magnet
- 2: Magnethalteleiste
- 3: Rolleiste
- 4: Wälzkörper
- 5: Abstandhalter
- 6: Dichtungen
- 7: Ankerplatte
- 8: Werkstückträger
- 9: Schlitten
- 10,11: Magnetrollschiene
- 12: Kurbelgetriebe
- 13: Transportband
- 14: Halteleiste
- 15: Antrieb
- 16: Rollen
- 17: Umlenkgehäuse
- 18: Hebel
- 19: Stelleiste
- 20: Druckfelder
- 21: Druckplatte
- 22: Gewindebuchse
- 23: Gewindebolzen
- 24: Gleitschiene
- 25: Gleitsteine
- 26: magnetisierbare Teile
- 27: Zuführeinrichtung
- 28: Anschlag
- 29: Grundkörper für Magnethalteleiste
- 30: Führungsleiste
- 2.1: Magnethalteleiste mit Führungsleiste
- 2.2: Magnethalteleiste ohne Führungsleiste
- 31: Antriebswelle
- 32: Umlenkrolle
- 33: Antriebsrad
- 34: Reibeinlage im Werkstückträger
- x: Abstand zwischen Magnethalteleisten
- y: definierte Verschiebung von Zuführeinrichtung und Anschlag
- A, B, C, E, F: definierte Positionen der Werkstückträger im Transportsystem
- A⁺, B⁺, C⁺, E⁺, F⁺: veränderte definierte Positionen der Werkstückträger
- B1: Werkstückträger im Stau
- B2 ....B8: Bewegungsphasen des Werkstückträgers

## Patentansprüche

1. Vorrichtung zum linearen Bewegen von Bauteilen, insbesondere für Transport- und Justierbewegungen, bei der die Bauteile magnetisch mit einer Führungsbahn koppelbar sind und die Bewegung mit Hilfe eines elektrisch angetriebenen Transportbandes (13) ausgeführt wird, **dadurch gekennzeichnet**, daß die Vorrichtung zwei parallel angeordnete Führungsmodule enthält, die jeweils mindestens einen Magnet (1), mindestens eine Magnethalteleiste (2) und ein Transportband (13) aufweisen, wobei die Transportbänder (13) oberhalb der Magnethalteleisten (2) laufen und daß die Bauteile auf einem Werkstückträger (8) angeordnet sind, der auf beiden Führungsmodulen gleitet und der mindestens eine Ankerplatte (7) aus magnetisierbarem Material enthält.

2. Vorrichtung nach Anspruch 1, **dadurch gekennzeichnet**, daß am Einlauf des Transportbandes (13) eine Zuführeinrichtung (27) und ein Anschlag (28) zur definierten Positionierung der Werkstückträger (8) angeordnet sind .

3. Vorrichtung nach Anspruch 1 oder 2, **dadurch gekennzeichnet**, daß mindestens einem Führungsmodul eine Fuhrungsleiste (30) zugeordnet ist, die formschlüssig in den Werkzeugträger (8) eingreift.

4. Vorrichtung nach einem der vorhergehenden Ansprüche, **dadurch gekennzeichnet**, daß für den Antrieb des Transportbandes (13) ein Schrittmotor oder Schrittgetriebe verwendet wird.

5. Vorrichtung nach einem der vorhergehenden Ansprüche, **dadurch gekennzeichnet**, daß entlang der Bewegungsbahn magnetisierbare Wälzkörper (4) angeordnet sind.

6. Vorrichtung nach einem der vorhergehenden Ansprüche, **dadurch gekennzeichnet**, daß die Ankerplatten (7) den gemeinsamen magnetischen Rückschluß zu mindestens zwei Magnethalteleisten (2) aus magnetisierbarem Material bilden, zwischen denen mindestens ein Magnet (1) so angeordnet ist, daß die Magnethalteleisten (2) unterschiedlich polarisiert werden, und daß oberhalb der Magnethalteleisten (2) Rolleisten (3) aus magnetierbarem Material angeordnet sind, zwischen denen sich die Wälzköper (4) befinden, so daß der Magnetfluß vom Magnet (1) über die Magnethalteleisten (2) und die Wälzkörper (4) auf die Rolleisten (3) und die Ankerplatten (7) geleitet wird.

7. Vorrichtung nach einem der vorhergehenden Ansprüche, **dadurch gekennzeichnet**, daß zwischen der Magnethalteleiste (2) und einer Gleitleiste (24) Gleitsteine (25) angeordnet sind, die Durchbrüche aufweisen, in denen sich mehrere magnetisierbare Teile (26) befinden.

8. Vorrichtung nach Anspruch 5 oder 6, **dadurch gekennzeichnet**, daß als magnetisierbare Wälzkörper Kugeln verwendet werden.

9. Vorrichtung nach einem der vorhergehenden Ansprüche, **dadurch gekennzeichnet**, daß der magnetische Fluß mit der am Werkzeugträger angeordneten Ankerplatte über beide Magnethalteleisten geleitet wird.
